# EUROPÄISCHE PATENTSCHRIFT

(11) **EP 0 771 695 B1**
(45) Veröffentlichungstag und Bekanntmachung des Hinweises auf die Patenterteilung: **06.05.1999**
(21) Anmeldenummer: 96115118.0
(22) Anmeldetag: 20.09.1996
(51) Int. Cl.: B60R 21/20

(54) **Innenverkleidungsteil**
Interior trim panel
Elément de garniture intérieure

(30) Priorität: 31.10.1995 DE 19540563
(43) Veröffentlichungstag der Anmeldung: 07.05.1997
(73) Patentinhaber: Deutsche Fibrit Gesellschaft Ebers & Dr. Müller mbH, 47929 Grefrath (DE)
(72) Erfinder: Harnisch, Hartmut, 47929 Grefrath (DE)
(74) Vertreter: Cohausz & Florack

(56) Entgegenhaltungen:
- DE-C- 4 411 283
- GB-A- 2 276 354
- GB-A- 2 287 226

## Beschreibung

Die Erfindung betrifft ein Innenverkleidungsteil, insbesondere eine Instrumententafel für Kraftfahrzeuge, bestehend aus einem mit einer Folie überzogenen Träger, der integral ist mit einer die Öffnung für den Durchtritt eines Airbags bei dessen Auslösung abdeckenden Klappe, die von der Folie mitüberdeckt ist, und durch eine Schwächungs- oder Perforationslinie entlang ihres Randes markiert ist.

Bislang hat man im aus Kunststoff oder aus formgepreßtem defibrierten Faserstoff oder aus Mischungen davon bestehendem Träger der Instrumententafel eine Ausnehmung für den Durchtritt des Airbags bei einem Zusammenstoß zum Schutze des Beifahrers in einem Kraftfahrzeug vorgesehen. Diese Ausnehmung wurde durch eine am Träger der Instrumententafel befestigte Klappe abgedeckt. Die Klappe war durch eine Folie überdeckt. Die gegebenenfalls schaumstoffbeschichtete Folie, die mittels Vakuums auf den Träger kaschiert wird, kann bevorzugt 2 bis 3 mm Gesamtstärke haben. Diese bekannte Lösung hatte den Nachteil, daß die Klappe als zusätzliches Teil gefertigt und montiert werden mußte. Das war arbeitsaufwendig, kosten- und gewichtsintensiv.

Um diesen Nachteil zu beheben, hat man auch schon vorgeschlagen, die Klappe als integralen Bestandteil des Trägers der Instrumententafel zu fertigen. Allerdings gelang dies bisher nur bei einer Ausführung, die mit einer verhältnismäßig dicken Schaumstoffschicht unter der Folie versehen war, so daß sich die Folienkaschierung nicht in die Fuge zwischen dem Instrumententafelträger und der Klappe hineinzieht, wie es bei dünnen Folienkaschierungen geschieht, wenn diese mittels Vakuums an den Träger gezogen wird. Dieser Nachteil sollte durch eine andere Lösung dadurch vermieden werden, daß die die Klappe auf einem Teil ihres Umfangs vom Träger trennende Fuge schmaler als 0,8 mm gehalten wurde, und daß die Folie im Bereich der Fuge geschwächt war.

Es wurde nun festgestellt, daß sich die Kontur der Klappe auf der Kaschierungsoberfläche über dem Träger der Instrumententafel, und sei es nur durch Schattenbildung oder Lichtbrechung, deutlich sichtbar abzeichnen kann.

Dieser Effekt kann z. B. durch eine in die Oberfläche geprägte Linie überdeckt werden, vgl. zum Beispiel das Dokument GB-A-2 287 226. Da eine solche Prägung die Narbstruktur und den Strak der Oberfläche unterbricht, wird sie oft als unschön empfunden.

Es stellt sich daher die Aufgabe, durch eine geeignete Maßnahme den störenden Eindruck einer fehlerhaften Oberfläche zu vermeiden, ohne dabei Narbstruktur und Strak der Oberfläche zu unterbrechen.

Zur Lösung dieser Aufgabe wird bei dem gattungsgemäßen Innenverkleidungsteil erfindungsgemäß vorgeschlagen, daß der durch eine Schwächung oder Perforation markierte Umfang der Klappe durch eine laserbehandelte Spur überdeckt ist. Dabei genügt bereits eine feine Linie, um den störenden Eindruck einer fehlerhaften Kaschierung zu vermeiden. Die Spur sollte vorzugsweise eine Breite von weniger als 3 mm, z. B. 0,2 mm, haben. Aus stilistischen Gründen kann die Spur aber auch bis zu mehreren Millimetern breit gewählt werden.

Durch die Laserbehandlung erhält die Spur eine andere Farbe als die Kaschierung.

Durch diese Maßnahme tritt zwar der Umfang der durch die Kaschierung des Innenverkleidungsteils verborgenen Airbag-Klappe sichtbar in Erscheinung, es entsteht jedoch nicht der falsche Eindruck, daß Innenverkleidungsteil sei fehlerhaft.

Desweiteren kann die aus Sicherheitsgründen vorgeschriebene Kennzeichnung des Airbag-Bereichs durch eine laserbehandelte Spur z. B. in Form eines Schriftzuges erzeugt werden.

Gemäß einer bevorzugten Ausgestaltung des erfindungsgemäßen Innenverkleidungsteils kann die Klappe durch einen aufgeklebten, angehefteten oder angeschraubten Streifen aus flexiblem reißfesten Material, wie Kunststoff oder Metall, an dem Träger befestigt sein.

Sicherheitshalber sollte gemäß einer bevorzugten Ausgestaltung der Erfindung der Steg zwischen der Klappe und dem Träger durch einen aufgeklebten, angehefteten oder angeschraubten Streifen aus flexiblem reißfestem Material, insbesondere ein Gewebe oder eine Metallplatte, verstärkt sein. Dieser Streifen verhindert, daß beim Auslösen des Airbag die Klappe vom Träger abgebrochen und dem Beifahrer entgegengeschleudert wird und ihn verletzt.

In der Zeichnung ist ein Ausführungsbeispiel der Erfindung dargestellt.

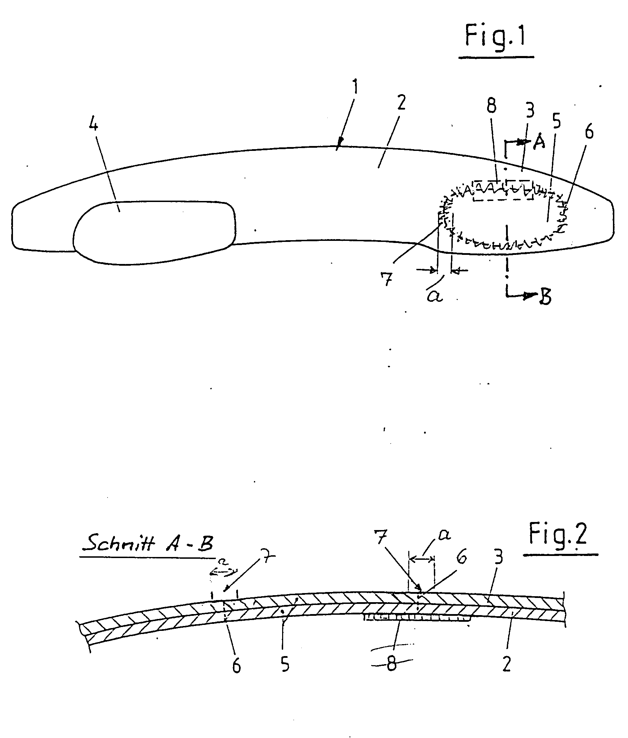

- Fig. 1: zeigt eine Instrumententafel eines Kraftfahrzeuges in Draufsicht und
- Fig. 2: im Teilquerschnitt längs der Linie A-B aus Fig. 1.

Die Instrumententafel 1 besteht wie üblich aus einem Träger 2, der mit einer Folie 3 überzogen ist. Zwischen Träger 2 und Folie 3 kann eine Schaumstoffschicht vorgesehen sein. Diese kann entweder gesondert auf den Träger 2 aufgebracht werden, oder der Träger 2 wird mit einer schaumstoffbeschichteten Folie kaschiert.

Auf der Fahrerseite ist eine Auswölbung 4 für die Unterbringung der Instrumente erkennbar. Auf der Beifahrerseite ist eine mit dem Träger 2 integrale Klappe 5 angeordnet, deren Umfang 6 durch eine Schwächung oder Perforation markiert ist. Die Klappe 5 ist mit dem Träger 2 durch einen Streifen 8 verbunden, der zur Verstärkung von unten am Träger 2 befestigt ist.

Bei dem in der Zeichnung dargestellten Ausführungsbeispiel ist die Klappe 5 in der Instrumententafel 1 vorgesehen. Sie könnte aber ebensogut auch in der Türseitenverkleidung angeordnet sein, wenn dort der Airbag für den Fahrer, den Beifahrer oder die Fondpassagiere untergebracht ist.

Der Umfang 6 der Klappe 5 ist durch eine laserbehandelte Spur 7 der Breite a überdeckt, die bevorzugt eine Breite unter 3 mm hat.

## Patentansprüche

1. Innenverkleidungsteil, insbesondere eine Instrumententafel für Kraftfahrzeuge, bestehend aus einem mit einer Folie (3) überzogenen Träger (2), der integral ist mit einer die Öffnung für den Durchtritt eines Airbags bei dessen Auslösung abdeckenden Klappe (5), die von der Folie (3) mitüberdeckt ist, und durch eine Schwächungs- oder Perforationslinie (6) entlang ihres Randes markiert ist, **dadurch gekennzeichnet, daß** die durch eine Schwächung oder Perforation markierte Umfangslinie (6) der Klappe (5) durch eine laserbehandelte Spur (7) überdeckt ist.

2. Innenverkleidungsteil nach Anspruch 12, **dadurch gekennzeichnet, daß** die Spur (7) eine Breite (a) von weniger als 3 mm hat.

3. Innenverkleidungsteil nach Anspruch 1, **dadurch gekennzeichnet, daß** die Spur (7) eine andere Farbe hat als die Folie (3).

4. Innenverkleidungsteil nach einem der Ansprüche 1 bis 4, **dadurch gekennzeichnet, daß** die Klappe (5) durch einen aufgeklebten, angehefteten oder angeschraubten Streifen (8) aus flexiblem reißfestem Material an dem Träger (2) befestigt ist.

## Claims

1. An interior trim panel, more particularly a motor vehicle dashboard, consisting of a support (2) covered with a foil (3) and integral with a flap (5) which covers the opening for the emergence of an airbag when it is released and which is also covered by the foil (3) and marked along its edge by a weakening perforation line (6), **characterised in that** the peripheral line (6) of the flap (5) marked by a weakening or perforation is covered by a laser-treated track (7).

2. An interior trim panel according to claim 1, **characterised in that** the track (7) has a width (a) of less than 3 mm.

3. An interior trim panel according to claim 1, **characterised in that** the track (7) has a different colour from the foil (3).

4. An interior trim panel according to one of claims 1 to 3, **characterised in that** the flap (5) is attached to the support (2) via a strip (8) of flexible tear-resistant material which is glued, stapled or screwed on.

## Revendications

1. Elément d'habillage intérieur, en particulier un tableau de bord de véhicules automobiles, constitué d'un support (2) revêtu d'une feuille (3) et qui est d'un seul tenant avec un clapet (5) recouvrant l'ouverture de passage d'un coussin gonflable lors de son déclenchement, lequel clapet est recouvert par la feuille (3) et est marqué par une ligne d'affaiblissement ou de perforation (5) le long de son bord, caractérisé en ce que la ligne périphérique (6) du clapet (6) marquée par un affaiblissement ou une perforation, est recouverte par une piste (7) traitée au laser.

2. Elément d'habillage intérieur selon la revendication 1, caractérisé en ce que la piste (7) présente une largeur (a) inférieure à 3 mm.

3. Elément d'habillage intérieur selon la revendication 1, caractérisé en ce que la piste (7) a une autre couleur que la feuille (3).

4. Elément d'habillage intérieur selon l'une des revendications 1 à 3 caractérisé en ce que le clapet (5) est fixé sur le support (2) par une bande (8) collée, agrafée ou vissée en matériau flexible résistant à la déchirure.
